# EUROPÄISCHE PATENTSCHRIFT

(11) **EP 0 885 137 B1**
(45) Veröffentlichungstag und Bekanntmachung des Hinweises auf die Patenterteilung: **10.10.2001**
(21) Anmeldenummer: 97902234.0
(22) Anmeldetag: 28.01.1997
(51) Int. Cl.: B60R 1/06

(54) **VERSTELLVORRICHTUNG FÜR ZUMINDEST ZWEI RÜCKBLICKSPIEGEL EINES FAHRZEUGS**
ADJUSTMENT DEVICE FOR AT LEAST TWO REAR-VIEW VEHICLE MIRRORS
DISPOSITIF DE REGLAGE POUR AU MOINS DEUX RETROVISEURS D'UN VEHICULE

(30) Priorität: 03.02.1996 DE 19603879
(43) Veröffentlichungstag der Anmeldung: 23.12.1998
(73) Patentinhaber: Volkswagen Aktiengesellschaft, 38436 Wolfsburg (DE)
(72) Erfinder: WELSCH, Frank, D-38179 Schwülper (DE); OEHLERKING, Conrad, D-38527 Meine (DE)
(86) Internationale Anmeldenummer: EP9700356
(87) Internationale Veröffentlichungsnummer: WO9728021

(56) Entgegenhaltungen:
- EP-A- 0 287 993
- EP-A- 0 447 770
- WO-A-96/16838
- PATENT ABSTRACTS OF JAPAN vol. 9, no. 183 (M-400) [1906] , 30.Juli 1985 & JP 60 050048 A (MAZDA), 19.März 1985,
- PATENT ABSTRACTS OF JAPAN vol. 14, no. 319 (M-0996), 9.Juli 1990 & JP 02 106452 A (OMRON TATEISI ELECTRON)
- PATENT ABSTRACTS OF JAPAN vol. 8, no. 54 (M-282), 10.März 1984 & JP 58 206441 A (KANTOU JIDOUSHIYA KOGYO), 1.Dezember 1983,
- PATENT ABSTRACTS OF JAPAN vol. 9, no. 238 (M-416) [1961] , 25.September 1985 & JP 60 092134 A (IKEDA BUTSUSAN)
- PATENT ABSTRACTS OF JAPAN vol. 12, no. 105 (M-681), 6.April 1988 & JP 62 234754 A (NEC HOME ELECTRONICS), 15.Oktober 1987,
- PATENT ABSTRACTS OF JAPAN vol. 12, no. 171 (M-700), 21.Mai 1988 & JP 62 286855 A (FUJITSU TEN), 12.Dezember 1987,
- PATENT ABSTRACTS OF JAPAN vol. 11, no. 213 (M-605), 10.Juli 1987 & JP 62 031540 A (HONDA MOTOR), 10.Februar 1987,

## Beschreibung

Die Erfindung betrifft eine Verstellvorrichtung für zumindest zwei Rückblickspiegel eines Fahrzeugs gemäß dem Oberbegriff des Patentanspruchs 1.

Aus der JP-60-050048-A und der JP-02-106452-A sind gattungsgemäße Verstellvorrichtungen bekannt geworden, bei denen mittels einer Wählschalteinheit die gemeinsame Verstellung wenigstens zweier Rückblickspiegel vorgenommen werden kann. Die Wählschalteinheiten sind so ausgeführt, daß neben der Schaltstellung für die gemeinsame Verstellung zwei weitere Schaltstellungen für die jeweils getrennte Einzelbetätigung der Rückblickspiegel vorgesehen ist. Für die Möglichkeit zur gemeinsamen Verstellung zweier Rückblickspiegel wird also eine Wählschalteinheit vorgeschlagen, deren Aufbau grundsätzlich verschieden ist von denjenigen zweistufiger Wählschalteinheiten, wie sie hinlänglich im Fahrzeugbau für die gewöhnliche Spiegelverstellung bekannt sind.

JP-58-206441-A beschreibt eine Verstellvorrichtung für Rückblickspiegel, die zur automatischen Verstellung zweier Rückblickspiegel als Stellglied einen Innenrückblickspiegel zeigt. Über dem Innenrückblickspiegel zugeordnete Positionssensoren wird die vom Fahrzeugführer vorgenommene Einstellung des Innenrückblickspiegels zur automatischen Mitverstellung der beiden Außenrückblickspiegel genutzt.

In der DE- 34 06 286-C1 wird beschrieben, wie zur gemeinsamen Verstellung zweier Rückblickspiegel nur eine einzige Einstellung an einem Betätigungselement erforderlich ist. Das Kernstück der dort beschriebenen Einrichtung ist eine Komparatorschaltung, die dafür sorgt, daß bei Einstellung eines ersten Rückspiegels (vorzugsweise derjenige auf der Fahrerseite) der zweite Rückblickspiegel (vorzugsweise derjenige auf der Beifahrerseite) automatisch so mitverstellt wird, daß er ebenfalls optimal auf die Augenposition des Fahrers eingeregelt ist. In der genannten Schrift wird ausdrücklich darauf hingewiesen, daß zur optimalen Anpassung an die Augenposition des Fahrers unterschiedliche Kennlinien der beiden einzustellenden Rückspiegel berücksichtigt werden müssen. Dies geschieht dort mittels einer gesonderten Transformationsschaltung, die mit der vorgenannten Komparatorschaltung zusammenwirkt. Die insgesamt im Hinblick auf die Bedienung als vorteilhaft anzusehende Verstellvorrichtung erfordert bereits zur Realisierung der Grundfunktionen eine aufwendige Sensorik und Regelelektronik.

Die gemeinsame Verstellung zumindest zweier Rückblickspiegel ist prinzipiell auch aus der DE-42 41 543-A1 (B60R 1/06) bekannt. Dort wird allerdings die gemeinsame Verstellung von einer sogenannten Gebrauchsstellung in eine winkelverschwenkte Abblendstellung vorgenommen. Es geht also darum, die Blendwirkung für einen Betreiber eines Fahrzeuges genau dann verhindern zu können, wenn durch nachkommende mit Licht fahrende Fahrzeuge insbesondere bei Nacht Reflektionen in den Rückblickspiegeln erzeugt werden. Die winkelverschwenkten Abblendstellungen der beiden Rückblickspiegel sind jedoch nicht aufeinander abgestimmt.

Der Erfindung liegt die Aufgabe zugrunde, gattungsgemäße Verstellvorrichtungen so weiterzubilden, daß entweder mit einem verringerten apparativen und schaltungstechnischen Aufwand eine vergleichbare Funktion realisiert werden kann oder bei vergleichbarem Aufwand im Hinblick auf eine fahrerindividuelle Anpassung eine Verbesserung der automatisierten Feinjustierung möglich ist.

Diese Aufgabe wird gelöst mit einer Verstellvorrichtung gemäß den Merkmalen der Patentansprüche 1und/oder 2 . Die Unteransprüche betreffen besonders zweckmäßige Weiterbildungen dieser Erfindungsvarianten.

Erfindungsgemäß erhalten also gemäß einer ersten Lösungsvariante zum Zwecke der gemeinsamen Verstellung wenigstens zweier Rückblickspiegel die zugehörigen Stellmotoren von einem Betätigungselement ein übereinstimmendes Stellsignal. Die beispielsweise an einem Tastschalter oder in einer bevorzugten Ausgestaltung der Erfindung auch an einem - gemäß DE-39 25 978-A1 (B60R 1/06) ausgeführten - Innenrückblickspiegel vorgenommene Einstellung wird von einer Signalübertragungseinrichtung in ein Stellsignal umgewandelt, das beiden Stellmotoren zugeführt wird. Die daraufhin erfolgende gemeinsame Bewegung der Spiegelelemente erfolgt in einer vorgegebenen Beziehung zueinander. Erfinderseitig ist man zu der Erkenntnis gelangt, daß die in der gattungsbildenden Entgegenhaltung beschriebenen Zusammenhänge hinsichtlich unterschiedlicher Kennlinien bei der Einstellung von Rückspiegeln im wesentlichen auf einen für den Betreiber eines Fahrzeuges akzeptablen Linearzusammenhang zurückgeführt werden können. Es genügt also beispielsweise die Ansteuerung des zweiten Spiegelelementes in proportionaler Abhängigkeit von der Einstellung des ersten Spiegelelementes. Bei der erfindungsgemäßen Verstellvorrichtung ist ein derartiges Verhältnis einstellbar über einen vorgegebenen Drehzahlunterschied bei gleichbleibender Verstellzeit der Stellmotoren oder umgekehrt bei konstanter Drehzahl beider Stellmotoren mittels unterschiedlicher Laufzeit. Ergänzend oder alternativ können auch die Übersetzungsverhältnisse der zwischen den Stellmotoren und den Spiegelelementen jeweils angeordneten Schwenk- und/oder Kippmechanismen fahrzeugspezifisch aufeinander abgestimmt werden.

Eine zweite Lösungsvariante, die in vorteilhafter Weise mit der ersten Lösungsvariante kombinierbar ist, sieht im Rahmen der Betätigungseinrichtung eine Wählschalteinheit vor, bei der in einer Grundeinstellung ein sogenannter "Rechts- und Links-Modus" vorgegeben ist. Zur Einstellung eines fahrzeug- oder fahrerspezifischen Blickfeldes kann der Rückblickspiegel auf der Beifahrerseite für Linkslenkerfahrzeuge in einer zweiten Wählstellung gesondert, also in einem "Nur-Rechts-Modus", und ohne Mitverstellung des Rückblickspiegels auf der Fahrerseite eingestellt werden. Für den normalen Fahrbetrieb kann dann anschließend durch Rückschaltung in die erste Wählposition die gemeinsame Verstellung beider Rückblickspiegel vorgenommen werden.

In vorteilhafter Weise ermöglicht die erfindungsgemäße Verstellvorrichtung die Verwendung konventioneller Tastschalter, wie sie beispielsweise in der EP-0 400 633-A2 (H01H 25/04) oder in der DE-42 13 133-C1 (B60R 1/06) beschrieben werden. Die insbesondere in der letztgenannten Schrift beschriebene Integration eines Wählschalters in das als Tastschalter ausgeführte Betätigungselement kann in günstiger Weise bei der erfindungsgemäßen Verstellvorrichtung genutzt werden.

Aus diesen Zusammenhängen wird deutlich, daß insbesondere für die Realisierung der zweiten Erfindungsvariante an bereits in Serie befindlichen Fahrzeugen lediglich an den Betätigungselementen die Verkabelung und Beschriftung geändert werden muß. Gewicht, Montage und Kosten pro Fahrzeug ändern sich aber nicht. Eine laufende Serienfertigung kann also mit geringem Aufwand im Hinblick auf die erfindungsgemäße Verstellungsvorrichtung erweitert oder umgestellt werden. Ebenso leicht möglich ist die Realisierung der Erfindung als Nachrüstsatz in bereits auf dem Markt befindlichen Fahrzeugen.

Mit der gemäß Anspruch 3 ausgeführten Verstellvorrichtung kann eine sehr kostengünstige Lösung realisiert werden, weil durch die Baugleichheit der Stellmotoren insbesondere für Großserienhersteller geringere Beschaffungskosten realisierbar sind. Auch die für die Verstellbewegung der Spiegelelemente relevanten Spindel-, Schneckenrad- oder Stirnradgetriebe, wie sie aus offenkundiger Vorbenutzung in unterschiedlichsten Varianten hinlänglich bekannt sind, können unter Berücksichtigung eines fest vorgegebenen Übersetzungsverhältnisses weitestgehend ähnlich ausgeführt werden.

Bei Verwendung identischer Übersetzungsverhältnisse ist allerdings gemäß Anspruch 3 auch die Integration eines Schaltgliedes in die Signalübertragungseinrichtung derart denkbar, daß während der Einstellbewegung die Drehzahl und/oder die Laufzeit des vorzugsweise baugleich ausgeführten zweiten Stellmotors in Abhängigkeit von dem direkt dem Betätigungselement zugeordneten ersten Stellmotor der vorgegebenen Beziehung folgend direkt oder nahezu proportional verändert ist.

An dieser Stelle wird ausdrücklich darauf hingewiesen, daß sämtliche Rückblickspiegel eines wie auch immer gearteten Fahrzeugs in eine erfindungsgemäße Verstellvorrichtung eingebunden werden können. Erfinderseitig ist man nämlich ergänzend noch zu der Erkenntnis gelangt, daß bei ordnungsgemäßer Einstellung des Innenrückblickspiegels auch dessen Position in einem fest vorgegebenen Verhältnis zu den jeweiligen Positionen von Außenrückblickspiegeln steht. Damit kann wie oben schon beschrieben der Innenrückblickspiegel selbst als Betätigungselement genutzt werden oder bei automatischer Verstellbarkeit an die Verstellung eines der Außenspiegel gekoppelt werden. In den heute üblichen Personenkraftfahrzeugen würde also bei einem Fahrerwechsel nur einer der drei Spiegel eingestellt werden müssen. Die automatische Anpassung der beiden anderen Spiegel ergibt sich dann entsprechend der fest vorgegebenen Zusammenhänge. Bei Verwendung des Innenrückblickspiegels als Betätigungselement können die vorzugsweise als Tastschalter ausgeführten Einstellschalter für die Außenspiegel ggfs. entfallen. Der Mehraufwand am Innenrückblickspiegel durch Verwendung eines ihm zugeordneten Positionssensorsystems wäre damit durch Entfall der Einstellschalter in etwa kompensiert.

Zur verbesserten Anpassung der Spiegeleinstellungen an die Kopfposition eines Fahrzeugbetreibers kann gemäß den Patentansprüchen 7 und 8 ergänzend oder alternativ durch geeignete Sensoren die Stellung des Fahrersitzes und die Neigung der Sitzlehne bestimmt werden. In der Signalübertragungseinrichtung werden die von diesen Sensoren gelieferten Signale bei der Steuerung der jeweiligen Spiegeleinstellungen mit berücksichtigt.

Ein vorteilhaftes Ausführungsbeispiel der Erfindung ist in der Zeichnung schematisch dargestellt. Es zeigt
- Figur 1:: in Ausschnitten am Beispiel eines Personenkraftfahrzeuges die grundsätzlichen Ausgangsvoraussetzungen für die Verwendung einer erfindungsgemäßen Verstellvorrichtung,
- Figur 2:: in schematischer Darstellung eine erfindungsgemäße Verstellvorrichtung,
- Figur 3:: die geometrischen Verhältnisse für Rückblickspiegelanordnungen in einem Fahrzeug gemäß Figur 1 und
- Figur 4:: den aus Figur 3 bestimmten Zusammenhang zwischen den Winkellagen zweier Außenspiegel.

In allen Figuren weisen gleiche Bauteile die gleiche Bezifferung auf.

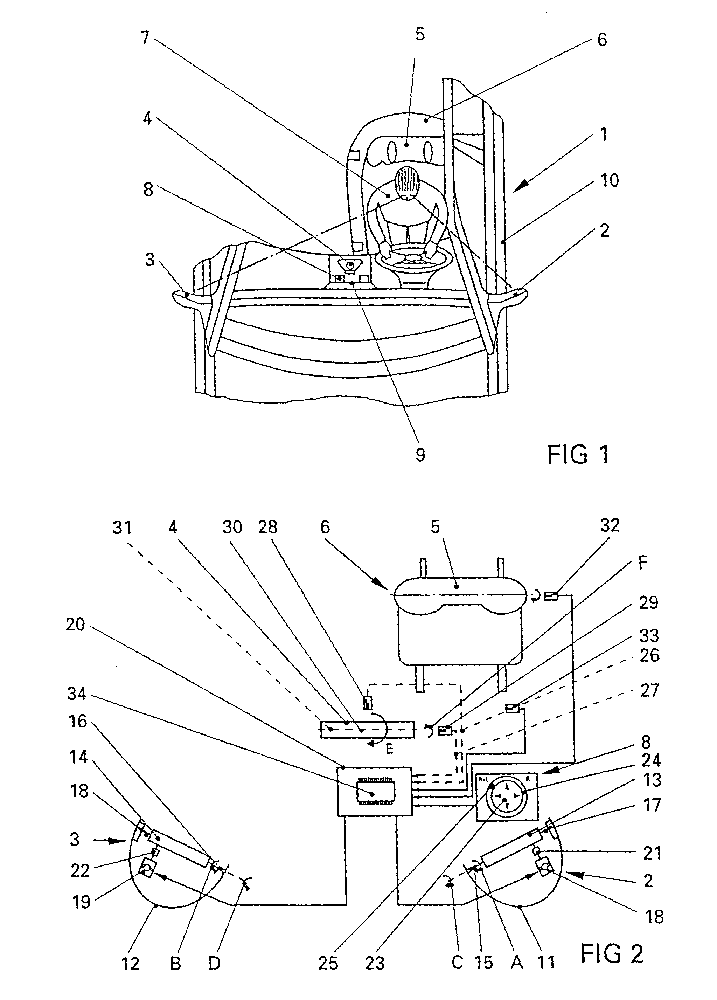

Man erkennt in Figur 1 ein insgesamt mit 1 bezeichnetes Fahrzeug in Linkslenkerausführung, dessen für die erfindungsgemäße Verstellvorrichtung wesentliche Bauelemente hier ein Außenspiegel 2 auf der Fahrerseite, ein Außenspiegel 3 auf der Beifahrerseite und ein Innenrückblickspiegel 4 sind. Auf einem eine Rückenlehne 5 aufweisenden Fahrersitz 6 befindet sich als Betreiber des Fahrzeugs 1 eine Person 7, durch die mittels einer Betätigungseinrichtung 8 die Positionen der Außenspiegel 2, 3 und in einer auf besonderen Komfort ausgelegten Ausführung ggfs. auch des Innenrückblickspiegels 4 einstellbar sind. Bei dem in der Zeichnung dargestellten Ausführungsbeispiel ist die Betätigungseinrichtung 8 einem hier nicht weiter bezifferten Bedienfeld einer Mittelkonsole 9 zugeordnet. Denkbar ist aber auch die Verlagerung der Betätigungseinrichtung 8 in ein hier nicht näher dargestelltes Verkleidungsteil einer Fahrertür 10 hinein. Es wird an dieser Stelle ausdrücklich darauf hingewiesen, daß die erfindungsgemäße Verstellvorrichtung sowohl in Linkslenker- als auch in Rechtslenkerfahrzeugen verwendbar ist. Es wird deshalb an dieser Stelle nicht von rechten und linken Spiegeln, sondern von Spiegeln auf der Fahrer- bzw. Beifahrerseite gesprochen.

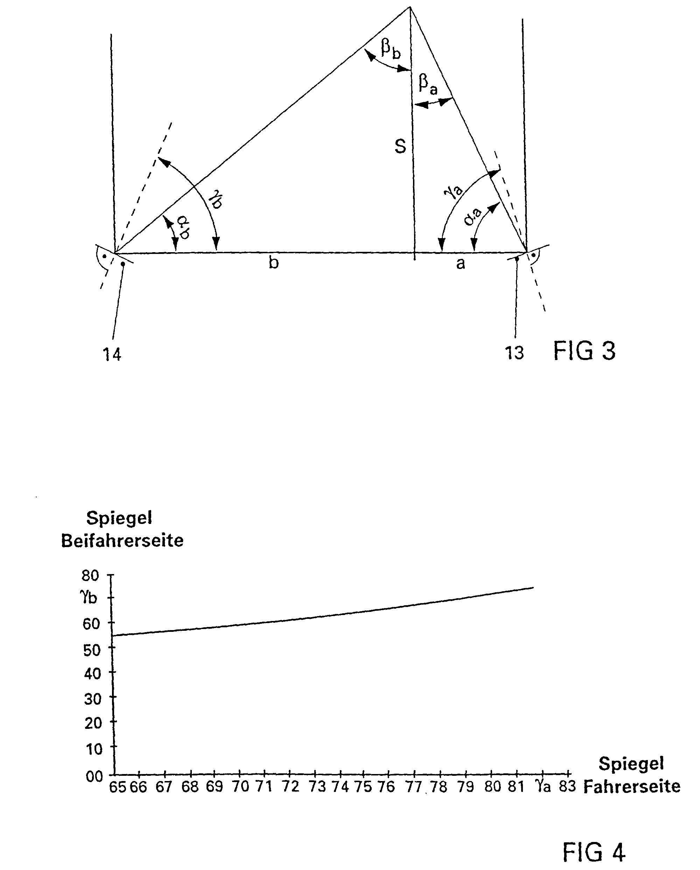

Die Darstellung in Figur 2 zeigt für die Außenspiegel 2 und 3 Gehäuse 11, 12, in denen Spiegelelemente 13, 14 um beispielsweise als Kugelgelenke ausgebildete Schwenklager 15, 16 gemäß den Pfeilen A, B verschwenkbar und um Drehachsen 17, 18 gemäß den Drehpfeilen C, D kippbar sind. Für die Verschwenkung der Spiegelelemente 13, 14 um die Schwenklager 15 bzw. 16 sind hier Stellmotoren 18, 19 vorgesehen, die beide von einer Signalübertragungseinrichtung 20 ansteuerbar sind. Als Mechanismus zur Verstellung der Spiegelelemente 13, 14 sind hier nur schematisch angedeutete Verstellspindeln 21, 22 vorgesehen. Aus Übersichtlichkeitsgründen sind Stellmotoren zur Verwirklichung der Kippbewegungen um die Achsen C bzw. D hier nicht dargestellt. Eine detaillierte Beschreibung kann allerdings der oben bereits genannten DE-42 41 543-A1 im Zusammenhang mit der Beschreibung zu den Figuren 2 und 5 entnommen werden. Gleiches gilt für den grundsätzlichen Aufbau des Innenrückblickspiegels 4 (siehe hierzu in der DE-42 41 543-A1 die Beschreibung zu den Figuren 3 und 4).

In der Betätigungseinrichtung 8 sind hier als besondere Weiterbildung der Erfindung und/oder als eigenständige Lösung ein Tastschalter 23 und als Wählschalteinheit ein Wählschalter 24 zusammengefaßt, der zwischen Rastpositionen mit der Bezeichnung "R + L" und "R" hier begrenzt verdrehbar ist. Eine auf der Stirnseite des Wählschalters 24 aufgebrachte Markierung in Form eines Farbtupfers und/oder einer noppenartigen Erhebung zeigt die jeweilige als erste Rastposition Wählstellung an. Bei der in der Zeichnung dargestellten Position des Wählschalters 24 ist also der "Rechts- und Links-Modus" eingestellt. Dieser Modus wird hier als Grundstellung bezeichnet. Durch Verdrehung des Wählschalters 24 im Uhrzeigersinn kann als zweite Wählstellung der sogenannte "Nur-Rechts-Modus" eingestellt werden. Während im erstgenannten Modus eine gleichzeitige Verstellung beider Spiegelelemente 13, 14 durch Betätigungen am Tastschalter 23 erzeugt wird, ist demgegenüber bei einer in Position "R" befindlichen Markierung 25 lediglich die gesonderte Verstellung des Spiegelelementes 14 möglich. Das Spiegelelement 13 behält dabei seine beim Verlassen des "Rechts-und-Links-Modus" zuletzt eingestellte Position.

Die Wählschalteinheit ist hier als Drehschalter ausgeführt. Alternativ kann aber auch eine Anordnung von zwei Druckschaltern realisiert werden, wobei durch Betätigung des einen Druckschalters die erste Wählstellung und durch Betätigung des zweiten Druckschalters die zweite Wählstellung vorgegeben ist (siehe hierzu beispielsweise die oben bereits erwähnte DE- 42 13 133-C1).

Mit Strichlinien 26 und 27 wird angedeutet, daß ggfs. auch der Innenrückblickspiegel 4 als Betätigungselement verwendet werden kann. In diesem Falle sind Lagemeßsensoren 28, 29 notwendig, durch die Bewegungen des Innenrückblickspiegels 4 um eine Schwenkachse 30 gemäß Drehpfeil E bzw. Kippbewegungen um eine Kippachse 31 gemäß Drehpfeil F als Stellbewegungen identifizierbar sind. Mit einer derartigen Einrichtung könnte ggfs. das Betätigungselement 8 entfallen. Vorstellbar ist aber auch, an diesem eine dritte Rastposition vorzusehen, um damit einen "Innenrückblickspiegel-Modus" vorwählen zu können. Gegebenenfalls können der Signalübertragungseinrichtung 20 auch noch Signale eines Lehnenneigungssensors 32 und eines Fahrersitzpositionssensors 33 zugeführt werden, um so die am Innenrückblickspiegel 4 vorgenommene Einstellung noch besser an die jeweilige Gestalt der Person 7 anpassen zu können. Unabhängig von der Verwendung in der erfindungsgemäßen Verstellvorrichtung kann durch das Zusammenspiel der Sensoren 28, 29, 32 und 33 mit einer Rechnereinheit 34 in der Signalübertragungseinrichtung 20 auch eine Warnvorrichtung gebildet sein, die Fehleinstellungen am Innenrückblickspiegel 4 in Bezug auf die jeweilige Position des Fahrzeugbetreibers 7 selbsttätig über akustische oder optische Melder signalisiert. Dabei kann das Signal nur eines der beiden Sensoren 32, 33 schon ausschlaggebend sein.

Die geometrischen Zusammenhänge für die in Figur 2 dargestellte Spiegelanordnung verdeutlicht Figur 3. Die Berechnung des Zusammenhangs zwischen den Positionen der Spiegelelemente 13 und 14 beruht auf der Annahme, daß sich die für die Person 7 optimale Spiegelstellung ergibt mit dem Zusammenhang γₐ = αₐ + 0, 5βₐ. Entsprechend gilt γ_{b} = α_{b} + 0,5β_{b}. Durch Berechnung ergibt sich dann für Personenkraftfahrzeuge als Beziehung zwischen den Winkeln γₐ und γ_{b} ein Kurvenverlauf, wie er in Figur 4 dargestellt ist. Man erkennt hier gut den nahezu linearen Zusammenhang. Es wird an dieser Stelle darauf hingewiesen, daß die jeweilige Breite eines Kraftfahrzeuges den Betrag der Strecke "a + b" bestimmt. Die Anordnung des Fahrersitzes mit Bezug zur Mittelachse des jeweiligen Fahrzeugs bestimmt den Betrag des Quotienten a/b.

In einem konkreten Ausführungsbeispiel würde die Anwendung der in den Figuren 3 und 4 dargestellten Zusammenhänge beispielsweise dazu führen, daß bei einem Verhältnis von a/b = 0,43 die verstellspindeln 21 und 22 hinsichtlich ihrer Übersetzungen im Verhältnis von beispielsweise 1 : 1,17 oder 1 : 1,18 stehen müssen. Eine Winkelverstellung des Spiegelelementes 13 würde also beim Spiegelelement 14 eine dem Verhältnis zwischen den Übersetzungen der Verstellspindeln 21, 22 entsprechenden Betrag größer ausfallen, so daß auf der Beifahrerseite ebenfalls eine optimale Spiegeleinstellung vorgenommen wird.

Praktische Versuche zeigen, daß aber auch ein Übersetzungsverhältnis von 1:1 noch gut zu vertretende Einstellgenauigkeiten liefert. In diesem Fall können in Produktion befindliche Fahrzeuge mit äußerst geringem Umfang auf die erfindungsgemäße Lösung umgestellt werden.

Zusammenfassend ist festzuhalten, daß mit der erfindungsgemäßen Verstellvorrichtung über die bereits genannten Vorteile hinaus insbesondere durch den Rückgriff auf in Fahrzeugen bereits vorhandene und damit auch bewährte Technik ein hohes Maß an Betriebssicherheit für den Fahrzeugbetreiber realisiert werden kann. Der Einsatz der erfindungsgemäßen Lösungen ist aber auch in solchen zukunftsweisenden Konzepten denkbar, bei denen an Betätigungselementen ausgelöste Signale über eine zentrale Steuerelektronik zur Einstellung von Spiegelelementen an Türen und/oder innerhalb des Fahrzeuges genutzt werden.

## Patentansprüche

1. Verstellvorrichtung für zumindest zwei Rückblickspiegel (2, 3) eines Fahrzeugs mit
- Stellmotoren (18; 19) zur Positionierung von Spiegelelementen (13, 14) mittels eines Schwenk- und/oder Kippmechanismus (21, 22),
- einer Betätigungseinrichtung zur Erzeugung von Stellsignalen für die gemeinsame Aktivierung der Stellmotoren (18, 19),
- wenigstens einer der Betätigungseinrichtung (8) zugeordneten Wähl schalteinheit (24), durch die eine gemeinsame Betätigung wenigstens zweier Spiegelelemente (13 und 14) und eine gesonderte Positionierbarkeit nur eines der Spiegelelemente (13 oder 14) vorgebbar ist,
- wenigstens einer Signalübertragungseinrichtung (20) zwischen der Betätigungseinrichtung (8) und den Stellmotoren (18, 19),
**dadurch gekennzeichnet, daß**
- für die Spiegelverstellung mittels eines Tastschalters (23) die Wählschalteinheit (24) zwischen nur zwei Wählstellungen umschaltbar ist,
- die eine der beiden Wählstellungen der gemeinsamen Betätigung der wenigstens zwei Spiegelelemente (13 und 14) zugewiesen ist,
- die andere der beiden Wählstellungen der gesonderten Positionierbarkeit nur eines der Spiegelelemente (13 oder 14) zugewiesen ist,
- durch die andere der beiden Wählstellungen das Spiegelelement (13 oder 14) auf der Beifahrerseite gesondert positionierbar ist.

2. Verstellvorrichtung nach Anspruch 1,
**dadurch gekennzeichnet,**
**daß** die wenigstens zwei Spiegelelemente (13,14) durch die Stellmotoren (18, 19) bei der gemeinsamen Betätigung im Verhältnis 1:1 verstellbar sind.

3. Verstellvorrichtung nach Anspruch 1,
**gekennzeichnet durch**
- zwei baugleiche Stellmotoren,
- je ein den Stellmotoren zugeordnetes, schneckenrad- oder stirnradartig ausgebildetes Getriebe im Schwenk- und/oder Kippmechanismus,
- ein im wesentlichen proportionales Verhältnis zwischen den Übersetzungen der Getriebe.

4. Verstellvorrichtung nach Anspruch 1 oder 2,
**dadurch gekennzeichnet,**
**daß** die Betätigungseinrichtung integraler Bestandteil eines Innenrückblickspiegels (4) ist.

5. Verstellvorrichtung nach Anspruch 1 oder 4,
**dadurch gekennzeichnet,**
**daß**
- der Innenrückblickspiegel (4) ein Bestandteil der Betätigungseinrichtung ist,
- die Wählschalteinheit zur Spiegelverstellung durch den Tastschalter (23) und zur Wählbarkeit des Innenrückblickspiegels (4) als Betätigungselement hergrichtet ist,
- zur Wählbarkeit des Innenrückblickspiegels (4) als Betätigungselement die Wählschalteinheit (24) in eine dritte Wählstellung umschaltbar ist,
- der Signalübertragungseinrichtung (20) Signale einer Lagesensoreinrichtung (28, 29) zuführbar sind, durch die die Einstellposition des Innenrückblickspiegels (4) erfaßbar ist.

6. Verstellvorrichtung nach Anspruch 1,
**dadurch gekennzeichnet,**
**daß** in der Betätigungseinrichtung (8) der Wählschalter (24) mit dem Tastschalter (23) zu einer Baueinheit zusammengefaßt ist.

7. Verstellvorrichtung nach Anspruch 1,
**dadurch gekennzeichnet,**
**daß** der Signalübertragungseinrichtung (20) ein Signal eines ersten Sensors (33) zuführbar ist, durch den die Position eines Fahrersitzes (6) erfaßbar ist.

8. Verstellvorrichtung nach Anspruch 1 oder 7,
**dadurch gekennzeichnet,**
**daß** der Signalübertragungseinrichtung (20) ein Signal eines zweiten Sensors (32) zuführbar ist, durch den die Neigung einer Rückenlehne (5) des Fahrersitzes (6) erfaßbar ist.

## Claims

1. Adjustment device for at least two rear-view mirrors (2, 3) of a vehicle having
- servomotors (18; 19) for positioning mirror elements (13, 14) by means of a pivot and/or tilt mechanism (21, 22),
- an actuating device to produce adjusting signals for the common actuation of the servomotors (18, 19),
- at least one selector switching unit (24) allocated to the actuating device (8), by means of which selector switching unit a common actuation of at least two mirror elements (13 and 14) and a separate positioning capability of only one of the mirror elements (13 or 14) can be provided,
- at least one signal transmission device (20) between the actuating device (8) and the servomotors (18, 19),
**characterised in that**
- for mirror adjustment by means of a push button (23) the selector switching unit (24) can be switched over between only two selection positions,
- one of the two selection positions is allocated to the common actuation of the at least two mirror elements (13 and 14),
- the other of the two selection positions is allocated to the separate positioning capability of only one of the mirror elements (13 or 14),
- by means of the other of the two selection positions the mirror element (13 or 14) on the passenger side can be separately positioned.

2. Adjustment device according to claim 1,
**characterised in that**
the at least two mirror elements (13, 14) can be adjusted in a ratio of 1:1 by the servomotors (18, 19) during common actuation.

3. Adjustment device according to claim 1,
**characterised by**
- two servomotors of the same construction,
- a transmission mechanism allocated to each of the servomotors and formed in a worm wheel-like or spur gear-like manner in the pivot and/or tilt mechanism
- a substantially proportional relationship between the transmission ratios of the transmission mechanisms.

4. Adjustment device according to claim 1 or 2,
**characterised in that**
the actuating device is an integral component of an internal rear-view mirror (4).

5. Adjustment mechanism according to claim 1 or 4,
**characterised in that**
- the internal rear-view mirror (4) is a component of the actuating device,
- the selector switching unit is arranged as an actuating element for mirror adjustment by means of the push button (23) and for selection of the internal rear-view mirror (4),
- for selection of the internal rear-view mirror (4) the selector switching unit (24) can be switched over as an actuating element into a third selection position,
- the signal transmission device (20) can be supplied with signals from a position sensor device (28, 29), by means of which the adjustment position of the internal rear view mirror (4) can be detected.

6. Adjustment device according to claim 1,
**characterised in that**
the selector switch (24) can be combined with the push button (23) to form a constructional unit inside the actuating device (8).

7. Adjustment device according to claim 1,
**characterised in that**
the signal transmission device (20) can be supplied with a signal from a first sensor (33), by means of which the position of a driver's seat (6) can be detected.

8. Adjustment device according to claim 1 or 7,
**characterised in that**
the signal transmission device (20) can be supplied with a signal from a second sensor (32), by means of which the inclination of a back rest (5) of the driver's seat (6) can be detected.

## Revendications

1. Dispositif de réglage d'au moins deux rétroviseurs (2, 3) d'un véhicule, comportant
- des servomoteurs (18 ; 19) destinés au positionnement d'éléments (13, 14) de rétroviseurs au moyen d'un mécanisme de pivotement et/ou de basculement (21, 22),
- un dispositif d'actionnement destiné à générer des signaux de réglage pour l'activation commune des servomoteurs (18, 19),
- au moins une unité de commutation de sélection (24) associée au dispositif d'actionnement (8) , par l'intermédiaire de laquelle peut être prescrit un actionnement commun d'au moins deux éléments (13 et 14) de rétroviseurs, et une possibilité de positionnement séparé de l'un seulement des éléments (13 ou 14) de rétroviseurs,
- au moins un dispositif de transmission de signaux (20) entre le dispositif d'actionnement (8) et les servomoteurs (18, 19),
**caractérisé en ce que**,
- pour le réglage des rétroviseurs au moyen d'un commutateur à touches (23), l'unité de commutation de sélection (24) n'est commutable qu'entre deux positions de sélection,
- l'une des deux positions de sélection est affectée à l'actionnement commun des deux éléments (13 et 14) au moins de rétroviseurs,
- l'autre des deux positions de sélection est affectée à la possibilité de positionnement séparé d'un seul des éléments (13 ou 14) de rétroviseurs,
- l'élément (13 ou 14) de rétroviseur situé du côté du passager peut être positionné séparément par l'autre des deux positions de sélection.

2. Dispositif de réglage selon la revendication 1,
**caractérisé en ce que**,
lors de l'actionnement commun, les deux éléments (13, 14) au moins de rétroviseurs peuvent être réglés par les servomoteurs (18, 19) dans un rapport de 1 : 1.

3. Dispositif de réglage selon la revendication 1,
**caractérisé par**
- deux servomoteurs de type identique,
- un engrenage de type à roue à denture hélicoïdale ou à roue à denture droite associé à chaque servomoteur dans le mécanisme de pivotement et/ou de basculement,
- un rapport sensiblement proportionnel entre les démultiplications des engrenages.

4. Dispositif de réglage selon la revendication 1 ou 2,
**caractérisé en ce que**
le dispositif d'actionnement fait partie intégrante d'un rétroviseur intérieur (4).

5. Dispositif de réglage selon la revendication 1 ou 4,
**caractérisé en ce que**
- le rétroviseur intérieur (4) est un élément constitutif du dispositif d'actionnement,
- l'unité de commutation de sélection est agencée pour le réglage du rétroviseur par le commutateur à touches (23), et afin de pouvoir sélectionner le rétroviseur intérieur (4) en tant qu'élément d'actionnement,
- afin de pouvoir sélectionner le rétroviseur intérieur (4) en tant qu'élément d'actionnement, l'unité de commutation de sélection (24) peut être commutée dans une troisième position de sélection,
- des signaux d'un dispositif de détection (28, 29) de position, pouvant détecter la position de réglage du rétroviseur intérieur (4), peuvent être transmis au dispositif de transmission de signaux (20).

6. Dispositif de réglage selon la revendication 1,
**caractérisé en ce que**
le sélecteur (24) est regroupé avec le commutateur à touches (23) en un module dans le dispositif d'actionnement (8) .

7. Dispositif de réglage selon la revendication 1,
**caractérisé en ce que**
un signal d'un premier détecteur (33) pouvant détecter la position d'un siège (6) de conducteur peut être transmis au dispositif de transmission de signaux (20).

8. Dispositif de réglage selon la revendication 1 ou 7,
**caractérisé en ce que**
un signal d'un deuxième détecteur (32) pouvant détecter l'inclinaison d'un dossier (5) du siège (6) du conducteur peut être transmis au dispositif de transmission de signaux (20).
